# FASCICULE DE BREVET EUROPEEN

(11) **EP 1 100 231 B1**
(45) Date de publication et mention de la délivrance du brevet: **22.11.2006**
(21) Numéro de dépôt: 00402932.8
(22) Date de dépôt: 23.10.2000
(51) Int. Cl.: H04L 12/44, H04L 12/40

(54) **Dispositif et boîtier pour raccordement à un réseau local.**
Vorrichtung und Verbindungsgehäuse für lokales Netz
Device and connection box for a local network

(30) Priorité: 25.10.1999 FR 9913481
(43) Date de publication de la demande: 16.05.2001
(73) Titulaire: Schneider Automation, 06560 Valbonne (FR)
(72) Inventeur: Pellegrino, Michael Dominique, 06110 Le Cannet (FR); Pignault, Bernard, 06370 Mouans-Sartoux (FR)

(56) Documents cités:
- US-A- 5 414 708
- US-A- 5 799 040

## Description

La présente invention concerne un dispositif de raccordement associé à une station.

De manière connue, il existe deux architectures très répandues pour connecter des stations à un réseau local de type Ethernet respectant la norme IEEE 802.3. La première architecture propose une topologie en bus passif, généralement appelée 10base2, dans laquelle on utilise comme support physique un câble coaxial fin, d'impédance caractéristique de 50 Ohms, qui constitue l'épine dorsale du réseau local et auquel chaque station est reliée, par exemple à l'aide d'un boîtier de dérivation en forme de T. La deuxième architecture propose une topologie en étoile, généralement appelée 10baseT, dans laquelle on utilise un câble à paires torsadées pour relier en point à point chaque station à un concentrateur (ou Hub).

La première architecture présente l'avantage de minimiser la longueur de câble nécessaire pour raccorder l'ensemble des stations, mais la mise en place de ce câble coaxial est délicate ou coûteuse dans certains cas. De plus, un tel câble s'avère plus sensible aux perturbations électromagnétiques dans certaines applications industrielles. La deuxième architecture présente l'avantage d'utiliser des câbles économiques et faciles à installer, mais nécessite l'achat, le raccordement et l'alimentation d'un ou plusieurs concentrateurs ainsi que l'installation d'un câble entre concentrateur et chaque station connectée.

Dans le document US5414708, on décrit un système dans lequel il est possible de connecter un équipement à un réseau IEEE 802.3 selon une topologie en bus à l'aide de deux paires torsadées de type 10baseT. Cependant, le système présenté s'appuie sur un bus actif comprenant des répéteurs (MAU - Medium Attachment Unit) incluant une alimentation et une logique numérique de façon à régénérer les signaux du réseau à chaque dérivation. En conséquence, lorsqu'un répéteur n'est plus alimenté, le système nécessite l'emploi de by-pass pour déconnecter ce répéteur afin de ne pas perturber le réseau.

Le but de l'invention est donc de cumuler les avantages d'une architecture simple en bus passif de type 10base2, c'est-à-dire ne nécessitant pas de régénération des signaux à chaque dérivation, tout en utilisant des câbles à paires symétriques très répandus et faciles à installer.

Pour cela, l'invention décrit un dispositif de raccordement selon la revendication 1. Le réseau local de transmission de données répond aux préconisations du protocole Ethernet, notamment une vitesse de transmission de 10 Mbit/s en bande de base et une méthode d'accès de type CSMA/CD.

Les revendications dépendantes 2-6 correspondent à des modes de réalisation. De plus, le support physique du réseau local peut être réalisé par deux paires symétriques appartenant à un câble de liaison muitipaires pouvant être blindé, chaque paire ayant une impédance unitaire sensiblement égale à 100 Ohms. Chaque station est raccordée au réseau local au moyen d'une interface qui effectue la mise en parallèle des deux paires symétriques, ces deux paires étant alors équivalentes à une ligne de transmission d'impédance sensiblement égale à 50 Ohms, correspondant à la valeur d'impédance habituelle des câbles coaxiaux dans une topologie de type 10base2.

L'invention décrit également un boîtier de raccordement comportant le dispositif de raccordement de l'invention, tel que définit par la revendication 6.

La description va être faite ci-après selon un mode de réalisation non limitatif de l'invention, en regard des dessins annexés, parmi lesquels :
- la figure 1 représente un exemple d'architecture d'un réseau local suivant l'invention,
- la figure 2 donne le schéma de principe d'un mode de réalisation d'une interface,
- la figure 3 détaille un exemple de réalisation d'un boîtier de raccordement,
- la figure 4 montre une variante du support physique du réseau local.

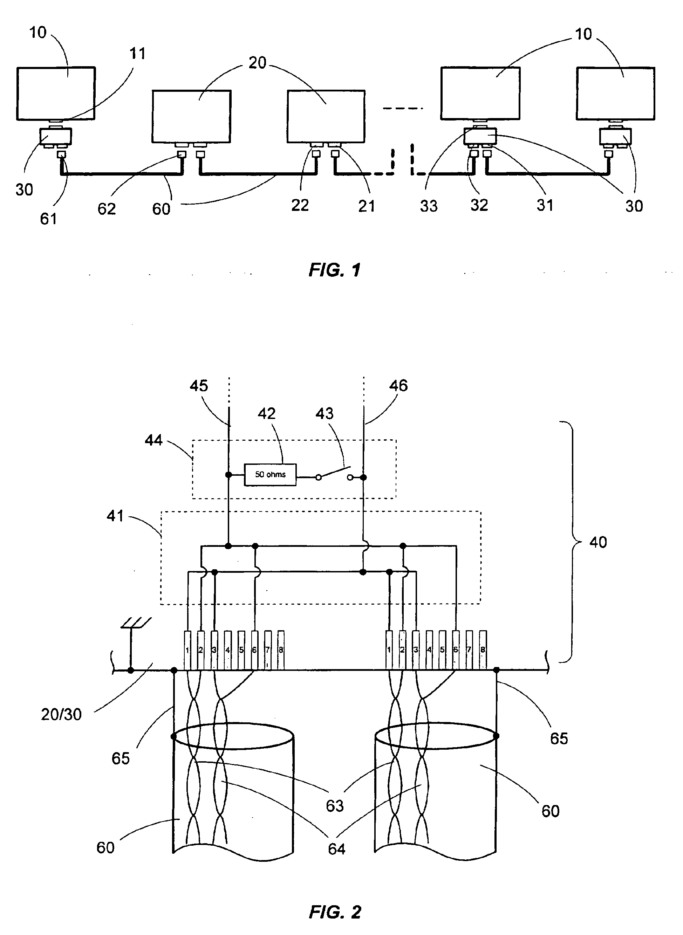

La figure 1 montre l'architecture d'un réseau local en bus passif où chaque station est connectée à la suivante au moyen d'un câble de liaison 60 muni à une extrémité d'un moyen de connexion 61 et à l'autre extrémité d'un moyen de connexion 62. Hormis les stations situées aux deux extrémités du réseau local, chaque station est donc rattachée à un premier câble de liaison 60 muni d'un moyen de connexion 61 en provenance d'une station précédente, et à un second câble de liaison 60 muni d'un moyen de connexion 62 à destination d'une station suivante.

Un premier type de station 20 est équipé de deux moyens de connexion au réseau 21, 22 pouvant directement s'accoupler respectivement à des moyens de connexion 61, 62. Un second type de station 10 est équipé d'un seul connecteur 11, ce qui nécessite la mise en place d'un boîtier de raccordement intermédiaire 30 pour raccorder la station 10 au réseau local. Ce boîtier de raccordement 30 comprend un connecteur de station 33 destiné à être accouplé au connecteur 11 de la station 10 ainsi que deux moyens de connexion au réseau 31, 32 pouvant s'accoupler respectivement à des moyens de connexion 61, 62.

Chaque câble de liaison 60 est constitué d'au moins une paire symétrique. Suivant un mode de réalisation avantageux schématisé en figure 2, le support physique du réseau local est réalisé par deux paires symétriques 63, 64 appartenant à un câble de liaison multipaires 60 à paires torsadées, chaque paire 63, 64 ayant une impédance unitaire sensiblement égale à 100 Ohms, comme on le trouve par exemple dans des câbles très répandus de type Catégorie 5 UTP. Dans des environnements susceptibles d'être électromagnétiquement perturbés, il est de plus préférable de prendre un câble de liaison 60 blindé et à paires torsadées de type UTP/S ou FTP.

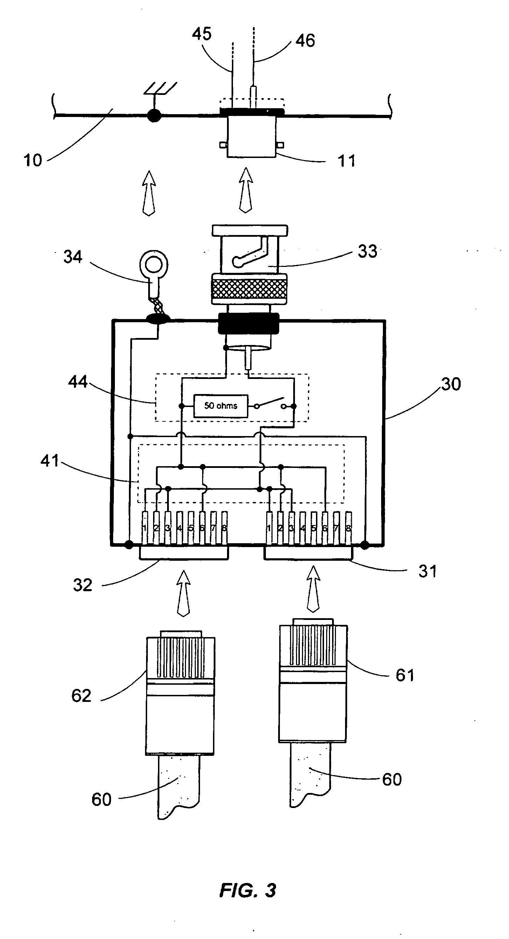

Il est possible d'utiliser, comme moyens de connexion 61, 62, des connecteurs de type RJ45 (voir figure 3) et comme moyens de connexion au réseau 21, 22, 31 et 32, des connecteurs de réseau de type RJ45 complémentaires qui correspondent à des connecteurs très fréquemment utilisés notamment en informatique. Il est également possible d'envisager une connexion fixe non débrochable entre les moyens de connexion 31 et 61 (ou entre les moyens de connexion 32 et 62, ou encore entre ces quatre moyens de connexion).

Le câble multipaires 60, montré dans le mode de réalisation de la figure 2, est blindé et est représenté avec seulement les deux paires 63, 64 utilisées pour constituer le support physique du réseau local. Ces deux paires sont, dans cet exemple, torsadées et reliées aux broches 1,2,3 et 6 d'un connecteur 8 broches de type RJ45. On pourrait utiliser de façon équivalente, sur l'ensemble du réseau local, d'autres paires du câble multipaires 60 reliées, par exemple aux autres broches 4,5,7 et 8 d'un connecteur RJ45.

Pour assurer le lien avec le câble de liaison 60, une interface 40 est présente dans chaque station 20 ainsi que dans chaque boîtier de raccordement 30 (voir figure 2). Cette interface comporte un circuit 41 dont le rôle est de :
- Assurer la continuité des signaux du réseau local en effectuant en interne la liaison électrique entre les deux moyens de connexion au réseau 21, 22 d'une station 20 ou les deux moyens de connexion 31, 32 d'un boîtier de raccordement 30. Ainsi, même si une station 20 ou une station 10 n'est plus alimentée, cela ne perturbe pas le réseau local.
- Assurer la dérivation du réseau vers la station au moyen des conducteurs 45, 46 qui véhiculent les signaux du réseau local.
- Mettre en parallèle les deux paires symétriques 63, 64 de chaque câble de liaison 60. Dans l'exemple de la figure 3, les broches 1,3 d'une part et 2,6 d'autre part d'un connecteur RJ45 sont ainsi reliées ensemble.

Cette mise en parallèle a pour conséquence que ces deux paires 63, 64 peuvent être assimilées à une seule ligne de transmission, chaque signal de cette ligne étant en fait véhiculé sur deux fils distincts parallèles appartenant l'un à la paire 63, l'autre à la paire 64. Si chacune des paires 63, 64 possède une impédance propre de 100 Ohms, alors leur mise en parallèle donne un support physique du réseau local équivalent à une seule ligne de transmission d'impédance sensiblement égale à 50 Ohms. On retrouve ainsi la valeur d'impédance habituelle des câbles coaxiaux dans une topologie de type 10base2. Ceci permet donc l'utilisation de l'électronique déjà développée pour la technologie du bus coaxial 50 Ohms, largement répandue et donc très économique. De plus, une station 10, développée selon cette technologie du bus coaxial, peut parfaitement s'interconnecter sans modification à un réseau local ayant comme support physique deux paires symétriques d'un câble de liaison multipaires 60, moyennant la seule adjonction d'un boîtier de raccordement, ce qui assure une compatibilité avec un parc existant très important.

Contrairement à l'utilisation habituelle de deux paires torsadées dans un réseau local avec une topologie 10baseT, les deux paires 63,64 ne sont donc pas utilisées l'une en émission et l'autre en réception, puisqu'elles sont raccordées en parallèle.

L'interface 40 peut comprendre également un bouchon 44 pour effectuer la terminaison de ligne du bus. Ce bouchon de terminaison 44 est branché entre les conducteurs 45, 46 véhiculant les signaux du réseau local vers la station et est constitué d'une résistance 42 d'une valeur proche de 50 Ohms et d'un interrupteur 43 montés en série. Lorsque l'interface 40 appartient à une station ou à un boîtier de raccordement situés à l'une des extrémités du réseau local, alors l'interrupteur 43 doit être placé en position fermé pour que la résistance 42 adapte la ligne de transmission et limite les réflexions en bout de segment; dans le cas contraire, l'interrupteur 43 doit rester en position ouvert. Selon un autre mode de réalisation non représenté dans la figure 2, la terminaison de la ligne peut ne pas être incluse à l'intérieur d'une interface 40, mais peut être réalisée par un bouchon extérieur indépendant raccordable sur un moyen de connexion au réseau 21, 22 ou 31, 32.

Enfin lorsque le câble de liaison 60 est blindé, l'interface 40 assure la connexion de l'écran de blindage 65 des câbles réseau 60 sur la masse mécanique de la station 20 ou du boîtier de raccordement 30.

L'invention décrit également un boîtier de raccordement 30 servant à raccorder au réseau local une station 10 équipée d'un seul connecteur 11. Selon le mode de réalisation présenté en figure 3, ce boîtier comporte :
- Deux moyens de connexion au réseau 31, 32 pouvant directement s'accoupler respectivement à des moyens de connexion 61, 62 de câbles réseau 60,
- Une interface 40 tel que décrit précédemment, comprenant un circuit 41 et le cas échéant un bouchon de terminaison 44,
- Un connecteur de terre 34 permettant de raccorder l'écran de blindage du câble de liaison 60 et la masse mécanique du boîtier de raccordement 30 à la masse mécanique de la station 10, dans le cas où le câble de liaison 60 serait blindé,
- Un connecteur de station 33 pouvant s'accoupler avec le connecteur 11 de la station 10. Les connecteurs 33 et 11 peuvent, par exemple, être du type BNC pour câble coaxial, du type SUB D ou du type M12 ou M23 ; les connecteurs de type BNC sont très répandus sur des stations Ethernet existantes.

Grâce à ce boîtier de raccordement 30, il est possible de connecter à un réseau local utilisant un câble de liaison multipaires 60, tel que décrit dans la présente invention, toute station existante munie d'une électronique et d'une connectique compatible avec un réseau Ethernet à topologie en bus 10base2. Plusieurs autres applications peuvent découler de l'invention :
- Une première application consiste à utiliser un câble de liaison multipaires 60, blindé, en remplacement d'un câble de liaison coaxial sur une portion ou un segment du réseau, notamment pour traverser une zone perturbée ou sensible aux parasites électromagnétiques. Les deux paires 63, 64 du câble de liaison multipaires sont torsadées et mises en parallèle, présentant ainsi les mêmes caractéristiques de transmission qu'un câble coaxial 10base2 ordinaire, il est possible de remplacer celui-ci par un tel câble de liaison 60. On est alors capable de connecter sur ce câble de liaison 60 des stations existantes munies par exemple d'un connecteur pour câble coaxial, moyennant l'utilisation de boîtiers de raccordement 30 décrits ci-dessus, ainsi que d'abouter entre eux plusieurs segments de réseau coaxiaux en évitant de remplacer le câble coaxial par de la fibre optique d'un coût bien supérieur. De nombreux exemples peuvent ainsi être trouvés en milieu industriel.
- Une seconde application consiste à utiliser un câble de liaison multipaires 60 en réservant deux paires comme support physique d'un réseau local et en utilisant les autres conducteurs à d'autres usages divers tel que un support pour une alimentation électrique, ou pour des signaux logiques ou analogiques.
- Une troisième application consiste à utiliser un câble de liaison 60 possédant au moins quatre paires symétriques en réservant deux paires comme support physique d'un premier réseau local et deux autres paires comme support physique d'un deuxième réseau local, permettant ainsi d'effectuer sur un même câble soit une redondance des réseaux locaux soit une augmentation du débit global.

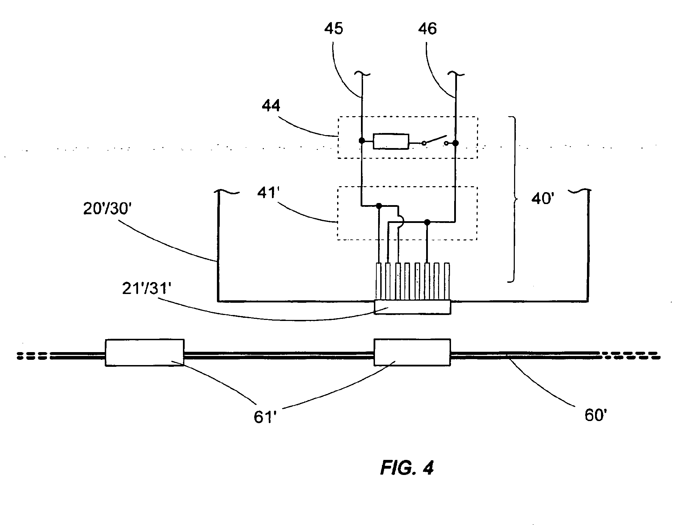

Une variante de l'invention, schématisée en figure 4, prévoit une architecture d'un réseau local en bus passif dont le support physique est un câble continu 60' comprenant au moins deux paires symétriques et le long duquel sont aménagées à différents intervalles des plages pour permettre le raccordement des stations. La dérivation vers une station se fait par insertion d'un connecteur de dérivation 61' directement dans le câble 60' (en utilisant, par exemple, une technique de perforation d'isolant avec un connecteur auto-dénudant), ce qui effectue une dérivation sans couper la continuité du câble 60'. Il est alors possible de connecter sur ce câble une station 20', ou un boîtier de raccordement 30', possédant un connecteur 21', respectivement 31', complémentaire du connecteur 61'. Une interface 40' présente dans chaque station 20' et dans chaque boîtier de raccordement 30', réalise le lien entre le câble 60' et les signaux du réseau véhiculés sur les conducteurs 45, 46. Cette interface 40' comporte un bouchon de terminaison 44 précédemment décrit et un circuit 41' dont le rôle se limite à mettre en parallèle les deux paires du câble 60'. De façon équivalente, on pourrait envisager un support physique comprenant deux paires symétriques réalisées par des pistes d'un circuit imprimé.

Dans un même réseau local, plusieurs de ces variantes du support physique peuvent cohabiter, à savoir un câble de liaison 60 entre chaque station, muni de moyens de connexion 61, 62 à chaque extrémité, et un câble continu 60' muni de connecteurs de dérivation 61' décrits ci-dessus, ainsi que des pistes d'un circuit imprimé.

## Revendications

1. Dispositif de raccordement associé à une station (10,20), destiné à raccorder ladite station à un réseau local de transmission de données de type Ethernet reliant au moins trois stations (10,20) les unes à la suite des autres, ledit réseau local ayant la topologie d'un bus passif et ayant un support physique comprenant un câble de liaison (60) comportant deux paires symétriques (63,64), **caractérisé par le fait que** le dispositif de raccordement ne comporte pas de moyens de régénération des signaux transmis sur le réseau local, et comporte un circuit (41) qui effectue la mise en parallèle des deux paires symétriques (63,64), le circuit (41) étant adapté pour fournir une valeur de l'impédance du support physique formé par les deux paires (63,64) d'environ 50 Ohms.

2. Dispositif de raccordement selon la revendication 1 **caractérisé par le fait que** le dispositif comporte un bouchon de terminaison (44) constitué d'une résistance de terminaison (42) d'environ 50 Ohms commutable par un interrupteur (43), lequel interrupteur n'est en position fermée que si le dispositif est associé à une station située à l'une des deux extrémités du réseau local.

3. Dispositif de raccordement selon la revendication 1, **caractérisé par** le fait le dispositif comporte deux connecteurs de réseau (21,22,31,32) de type RJ45 susceptibles de se raccorder avec des connecteurs complémentaires (61,62) de type RJ45 placés à chaque extrémité d'un câble de liaison (60).

4. Dispositif de raccordement selon la revendication 1, **caractérisé par le fait que** le dispositif comporte un seul connecteur de réseau (21',31') susceptible de se raccorder avec un connecteur de dérivation (61') d'un câble de liaison continu (60').

5. Dispositif de raccordement selon la revendication 1, **caractérisé par le fait que** le dispositif est intégré dans la station associée (20).

6. Boîtier de raccordement (30) comportant le dispositif de raccordement selon la revendication 1 intégré, ledit boîtier de raccordement (30) étant externe à la station associée (10), le boîtier comportant un connecteur de station (33) adapté pour raccorder ladite station associée (10) munie d'un connecteur (11) correspondant.

## Claims

1. Connection device associated with one station, (10, 20) intended to link the said station to an Ethernet-type local information transmission network linking at least three stations (10, 20) one after the other, said local network having a passive bus topology and a physical support that includes a linking cable (60) comprising two symmetrical pairs (63, 64), **characterised by** the fact that that the linking device comprises no means of regenerating signals transmitted on the local network, and comprising a circuit (41) that places the two symmetrical pairs (63, 64) parallel, the circuit (41) being adapted to furnish an impedance value of about 50 Ohms for the physical support made up of the two pairs (63, 64).

2. Connection device according to Claim 1, **characterised by** the fact that the device comprises a termination plug (44) made up of a termination resistance (42) of about 50 Ohms operated by a switch (43) which is only in the closed position if the device is linked to a station located at one of the ends of the local network

3. Connection device according to Claim 1, **characterised by** the fact that the device comprises two RJ45-type network connectors (21, 22, 31, 32) that can be linked with FJ45-type related connectors (61, 62) placed at each end of the connecting cable (60).

4. Connection device according to Claim 1, **characterised by** the fact that the device comprises a single network connector (21', 31') that can be linked with the branch connector (61') of a continuous connecting cable (60').

5. Connection device according to Claim 1, **characterised by** the fact that the device is integrated into the associated station (20).

6. Connection housing (30) comprising the integrated connecting device according to claim 1, said housing (30) being external to the associated station (10), the housing comprising a station connector (33) intended to connect the said associated station (10) provided with a related connector (11).

## Patentansprüche

1. Anschlussvorrichtung, die einer Station (10, 20) zugeordnet und dazu bestimmt ist, die Station an ein lokales Datenübertragungsnetz vom Typ Ethernet anzuschließen, das mindestens drei Stationen (10, 20) nacheinander verbindet, wobei das lokale Netz eine passive Bus-Topologie hat und einen physikalischen Träger besitzt, der ein Verbindungskabel (60) mit zwei symmetrischen Adernpaaren (63, 64) aufweist, **dadurch gekennzeichnet, dass** die Anschlussvorrichtung keine Regenerierungsmittel der im lokalen Netz übertragenen Signale aufweist und eine Schaltung (41) besitzt, die die Parallelschaltung der zwei symmetrischen Adernpaare (63, 64) durchführt, wobei die Schaltung (41) ausgelegt ist, um einen Impedanzwert des von den beiden Adernpaaren (63, 64) gebildeten physikalischen Trägers von etwa 50 Ohm zu liefern.

2. Anschlussvorrichtung nach Anspruch 1, **dadurch gekennzeichnet, dass** die Vorrichtung einen Endstecker (44) aufweist, der aus einem Endwiderstand (42) von etwa 50 Ohm besteht, der von einem Unterbrecher (43) umgeschaltet werden kann, wobei der Unterbrecher nur in der geschlossenen Stellung ist, wenn die Vorrichtung einer Station zugeordnet ist, die sich an einem der beiden Enden des lokalen Netzes befindet.

3. Anschlussvorrichtung nach Anspruch 1, **dadurch gekennzeichnet, dass** die Vorrichtung zwei Netzverbinder (21, 22, 31, 32) vom Typ RJ45 aufweist, die an komplementäre Verbinder (61, 62) vom Typ RJ45 angeschlossen werden können, die an jedem Ende eines Verbindungskabels (60) angeordnet sind.

4. Anschlussvorrichtung nach Anspruch 1, **dadurch gekennzeichnet, dass** die Vorrichtung einen einzigen Netzverbinder (21', 31') aufweist, der an einen Abzweigverbinder (61') eines kontinuierlichen Verbindungskabels (60') angeschlossen werden kann.

5. Anschlussvorrichtung nach Anspruch 1, **dadurch gekennzeichnet, dass** die Vorrichtung in die zugeordnete Station (20) integriert ist.

6. Anschlussgehäuse (30), in das die Anschlussvorrichtung nach Anspruch 1 integriert ist, wobei das Anschlussgehäuse (30) außerhalb der zugeordneten Station (10) liegt, wobei das Gehäuse einen Stationsverbinder (33) aufweist, der ausgelegt ist, um die mit einem entsprechenden Verbinder (11) versehene zugeordnete Station (10) anzuschließen.
